# EUROPÄISCHE PATENTSCHRIFT

(11) **EP 2 568 124 B1**
(45) Veröffentlichungstag und Bekanntmachung des Hinweises auf die Patenterteilung: **16.04.2014**
(21) Anmeldenummer: 12181545.0
(22) Anmeldetag: 23.08.2012
(51) Int. Cl.: F01D 25/20, F02C 7/12, F02C 7/22, F02C 7/32

(54) **Baueinheit für ein Triebwerk eines Luftfahrzeugs**
Construction unit for an engine of a plane
Composant pour une turbine d'un aéronef

(30) Priorität: 02.09.2011 DE 102011112253
(43) Veröffentlichungstag der Anmeldung: 13.03.2013
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE)
(74) Vertreter: Kronthaler, Wolfgang N.K.

(56) Entgegenhaltungen:
- EP-A2- 2 123 883
- WO-A1-00/79103

## Beschreibung

Die Erfindung betrifft eine Baueinheit für ein Triebwerk eines Luftfahrzeugs gemäß der im Oberbegriff des Patentanspruches 1 näher definierten Art.

Bekannte Triebwerke für Flugzeuge weisen einen Brennstoffkreislauf, der Treibstoff mittels Treibstoffpumpen von einem Treibstofftank zu Brennkammern leitet, und ein separates Schmierölsystem mit einem Öltank und einem Ölfilter auf, bei welchem Öl durch Ölpumpen zur Schmierung und Kühlung der Hauptlager des Triebwerks und von Lagern und anderen beweglichen Teilen von Hilfsgerätegetriebeeinrichtung einschließlich von Hilfsaggregaten gefördert wird. Als Hilfsaggregate können beispielsweise eine Brennstoffpumpe, ein Entlüfter, ein Generator oder dergleichen, zum Einsatz kommen. Der Treibstoffkreislauf und der Ölkreislauf sind beide zu einem Wärmetauscher geführt, um den Treibstoff betriebszustandsabhängig zu erwärmen und gleichzeitig das Öl des Ölkreislaufes zu kühlen.

Herkömmlicherweise sind die Treibstoffpumpen und die Ölpumpen mit einer Hilfsgerätegetriebeeinrichtung gekoppelt, welche von einer Triebwerkswelle angetrieben wird. Die Treibstoffpumpen und die Ölpumpen wirken dabei mit separaten Hilfsgerätegetriebewellen zusammen, welche auch zum Antrieb weiterer Hilfsaggregate, wie beispielsweise einem Entlüfter, einem Generator, einem pneumatischen Starter oder dergleichen vorgesehen sein können.

Solche Hilfsgerätegetriebewellen sind im Wesentlichen achsparallel zueinander angeordnet und an den zur Verfügung stehenden Bauraum im Triebwerk angepasst. Dabei sind sie im Wesentlichen in Umfangsrichtung des Triebwerkes verteilt nebeneinander positioniert und werden über Stirnradstufen von einer mit der Triebwerkswelle wirkverbundenen Antriebswelle der Hilfsgerätegetriebeeinrichtung angetrieben.

Die Hilfsaggregate sind jeweils auf einer separaten Hilfsgerätegetriebewelle der Hilfsgerätegetriebeeinrichtung angeordnet und beispielsweise über Bolzenverbindungen mit einem Gehäuse der Hilfsgerätegetriebeeinrichtungen verbindbar, wobei die Hilfsgerätegetriebeeinrichtung durch die Vielzahl von benötigten Hilfsgerätegetriebewellen nachteilhafterweise einen großen Bauraum benötigt und durch ein hohes Gesamtgewicht gekennzeichnet ist.

In der EP 2 123 883 A2 ist ein Triebwerk beschrieben, welches im Bereich eines Zwischengehäuses ein Hilfsgetriebe aufweist. Das Hilfsgetriebe weist einen ersten Flügel und einen zweiten Flügel auf, welche in Umfangsrichtung zueinander versetzt sind und mit dem Zwischengehäuse verbunden sind. Das Hilfsgetriebe ist unter anderem mit einer Ölpumpe und einer Treibstoffpumpe ausgeführt, welche jeweils mit einem Verbindungszahnrad wirkverbunden sind. Das Verbindungszahnrad steht über eine Antriebswelle in Eingriff mit einer Kompressorwelle steht.

Der vorliegenden Erfindung liegt daher die Aufgabe zugrunde, eine Baueinheit für ein Triebwerk zu schaffen, bei der die Anordnung von Hilfsaggregaten an einer Hilfsgerätegetriebeeinrichtung derart verbessert ist, dass ein bauraumgünstiges und ein geringes Gesamtgewicht aufweisendes Triebwerk realisiert werden kann.

Erfindungsgemäß wird diese Aufgabe mit einer Baueinheit für ein Triebwerk eines Luftfahrzeugs mit den Merkmalen des Patentanspruches 1 gelöst.

Es wird eine Baueinheit für ein Triebwerk eines Luftfahrzeugs, insbesondere eines Strahltriebwerks, mit wenigstens einer Brennstoffpumpe eines Brennstoffkreislaufes und wenigstens einer Hydraulikfluidpumpe eines Hydraulikfluidkreislaufes vorgeschlagen, wobei die Baueinheit mit einer Hilfsgerätegetriebewelle einer Hilfsgerätegetriebeeinrichtung des Triebwerks koppelbar ist.

Die erfindungsgemäße Lösung hat den Vorteil, dass durch die Baueinheit mehrere bei herkömmlichen Triebwerken jeweils mit einer separaten Hilfsgerätegetriebewelle koppelbare Pumpen mit einer einzigen gemeinsamen Hilfsgerätegetriebewelle koppelbar sind. Gegenüber bekannten Hilfsgerätegetriebeeinrichtungen, bei denen Brennstoffpumpen und Hydraulikfluidpumpen auf separaten Hilfsgerätegetriebewellen angeordnet sind, kann mit einer erfindungsgemäßen Baueinheit die Anzahl von Hilfsgerätegetriebewellen reduziert werden. Durch den Wegfall zumindest einer Hilfsgerätegetriebewelle und damit korrespondierender Zahnräder wird vorteilhafterweise Bauraum und Gewicht eingespart, so dass auch Kosten eines gesamten Triebwerks mit der erfindungsgemäßen Lösung reduziert werden.

Weiterhin kann in vorteilafter Weise die Länge einer mit der erfindungsgemäßen Baueinheit zusammenwirkenden Hilfsgerätegetriebeeinrichtung durch den Wegfall zumindest einer Hilfsgerätegetriebewelle in Umfangsrichtung des Triebwerks reduziert werden, wodurch wiederum die Komplexität von Versorgungsleitungen innerhalb der nunmehr verkürzbaren Hilfsgerätegetriebeeinrichtung reduziert wird.

Auch die zur Montage des Triebwerks nötige Arbeitszeit wird durch die erfindungsgemäße Lösung verkürzt, da weniger Teile installiert werden müssen.

Bei einer vorteilhaften Ausführung einer erfindungsgemäßen Baueinheit sind die wenigstens eine Brennstoffpumpe und die wenigstens eine Hydraulikfluidpumpe in einem gemeinsamen Gehäuse angeordnet. Durch diese Maßnahme können wiederum Gewicht und Kosten eingespart werden.

Wenn eine Hochdruckbrennstoffpumpe und eine Niederdruckbrennstoffpumpe vorgesehen sind, welche auf einer gemeinsamen Welle der Baueinheit angeordnet sind, kann ein von der Baueinheit in radialer Richtung benötigter Bauraum sehr gering sein.

Eine alternative oder zusätzliche Möglichkeit zur Reduzierung des in radialer Richtung weisenden Bauraums der Baueinheit besteht darin, dass eine Hydraulikfluidförderpumpe und wenigstens eine Hydraulikfluidrücklaufpumpe vorgesehen sind, welche auf einer gemeinsamen Welle der Baueinheit angeordnet sind. Diese Welle verläuft dann insbesondere parallel zu der Welle, auf der die Brennstoffpumpen angeordnet sind.

In einer hierzu alternativen Ausführung der Erfindung können eine Ölförderpumpe und wenigstens eine Hydraulikfluidrücklaufpumpe vorgesehen sein, welche auf separaten, insbesondere parallel zueinander verlaufenden Wellen der Baueinheit angeordnet sind. Durch diese Anordnung können die Hydraulikfluidförderpumpe und die wenigstens eine Hydraulikfluidrücklaufpumpe durch eine entsprechende Kopplung mit verschiedenen Drehzahlen angetrieben werden.

Eine Kopplung der Wellen der Baueinheit wird bei einer einfachen Ausführung der Erfindung über eine Getriebeeinrichtung der Baueinheit insbesondere mit wenigstens einer Zahnradstufe vorgenommen. Die Wellen können hierdurch mit einer gewünschten Übersetzung zueinander angetrieben werden.

Um die Baueinheit auf einfache Weise an eine Hilfsgerätegetriebewelle der Hilfsgerätegetriebeeinrichtung koppeln zu können, weist die Getriebeeinrichtung bei einer vorteilhaften Ausgestaltung einen mit einer Hilfsgerätegetriebewelle koppelbaren Wellenbereich auf, welcher insbesondere mit einer Außenverzahnung ausgeführt ist. Der Wellenbereich kann insbesondere mit einer Hohlwelle der Hilfsgerätegetriebeeinrichtung zusammenwirken, welche eine mit der Außenverzahnung korrespondierende Innenverzahnung aufweist.

Bei einer bevorzugten Ausführung der Erfindung ist ein Wärmetauscher Bestandteil der Baueinheit, welcher insbesondere in das Gehäuse der Baueinheit integriert ist. Durch die Nähe des Wärmetauschers zu den Pumpen ist eine den Wärmetauscher mit den Pumpen verbindende Leitungslänge gegenüber bekannten Lösungen mit getrennt voneinander angeordneten Pumpen und Wärmetauschern stark reduziert, und die die Pumpen mit dem Wärmetauscher verbindenden Leitungen können in die Baueinheit integriert sein, wodurch ein von der Baueinheit benötigter Bauraum sehr gering gehalten wird. Zudem hat eine derartige Ausführung der erfindungsgemäßen Baueinheit den Vorteil, dass die gesamte Baueinheit mit den Pumpen und dem Wärmetauscher insgesamt beispielsweise zu Wartungs- und Reparaturarbeiten von der Hilfsgerätegetriebewelle entfernt und an dieser angeordnet werden können und somit weniger Einzelteile installiert bzw. deinstalliert werden müssen. Weiterhin wird damit eine Baueinheit geschaffen, welche sowohl einen Transport als auch eine Temperierung des Hydraulikfluids und des Brennstoffes übernimmt.

Eine Temperierung des Brennstoffes bei gleichzeitiger Kühlung des Hydraulikfluids, insbesondere Öl, wird bei einer vorteilhaften Ausführung der Erfindung dadurch erzielt, dass der Wärmetauscher zur Temperierung von von der Hydraulikfluidpumpe und/oder wenigstens einer Hydraulikfluidrücklaufpumpe gefördertem Kühl- bzw. Schmiermittel mit einem von der Niederdruckbrennstoffpumpe und/oder der Hochdruckbrennstoffpumpe geförderten Brennstoff arbeitet, wobei der Wärmetauscher insbesondere als brennstoffgekühlter Ölkühler ausgebildet ist.

Der Wärmetauscher kann auf einfache Weise als Lamellenkühleinrichtung, Rippenplatten-Wärmetauscher oder dergleichen ausgebildet sein. Ein derartiger Wärmetauscher, welcher beispielsweise mit miteinander verschweißten Blechen ausgebildet ist, kann sehr einfach an eine Außenkontur der Pumpen angepasst werden, so dass ein von der gesamten Baueinheit benötigter Bauraum sehr gering ist und ein Wärmetausch durch die angepassten Konturen sehr effizient ist.

Um einen effizienten Wärmeaustausch im Bereich des Wärmetauschers zu erzielen, kann der Wärmetauscher im Wesentlichen senkrecht zu den Wellen der Baueinheit in einem seitlichen Randbereich der Pumpen und/oder in einem umfangsseitigen Bereich wenigstens einer der Pumpen angeordnet sein und insbesondere sämtliche Pumpen der Baueinheit umfassen.

Besonders vorteilhaft ist es, wenn der Wärmetauscher rohr- oder ringförmig um wenigstens eine Pumpe angeordnet ist. Dies ermöglicht eine verbesserte Wärmeübertragung und eine weitere Gewichtsreduktion, da eine Außenwand der Pumpen als Innenwand des Wärmetauschers genutzt werden kann. Zudem können die Pumpen durch einen derartigen Wärmetauscher gegen einen Wärmeeintrag von außerhalb abgeschirmt werden.

Wird der Wärmetauscher zumindest teilweise in einem Bereich zwischen einer der Brennstoffpumpen und einer der Hydraulikfluidpumpen angeordnet, können die Brennstoffpumpen und die Hydraulikfluidpumpen räumlich voneinander getrennt werden, so dass ein Brennstoffkreislauf sicher von einem Hydraulikfluidkreislauf separiert ist.

Die Pumpen der Baueinheit können je nach Anwendungsfall als Zahnrad-, Spindel-, Flügelzellenpumpe oder dergleichen ausgeführt sein.

Sowohl die in den Patentansprüchen angegebenen Merkmale als auch die in den nachfolgenden Ausführungsbeispielen der erfindungsgemäßen Baueinheit angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Baueinheit ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes mit einer im Wesentlichen im Bereich eines Zwischengehäuses des Strahltriebwerks angeordneten Hilfsgerätegetriebeeinrichtung, welche mit einer im Bereich eines Zwischengehäuses angeordneten Baueinheit koppelbar ist;
- Fig. 2: eine stark schematisierte Längsschnittansicht des Strahltriebwerks der Fig. 1 mit einer im Wesentlichen in radialer Richtung außerhalb eines Nebenstromkanals des Strahltriebwerks angeordneten Hilfsgerätegetriebeeinrichtung, welche mit einer in radialer Richtung außerhalb des Nebenstromkanals angeordneten Baueinheit koppelbar ist;
- Fig. 3: eine vereinfachte Darstellung einer ersten Ausführung der Baueinheit mit Brennstoffpumpen und Hydraulikfluidpumpen in Alleinstellung;
- Fig. 4: eine vereinfachte Darstellung einer zweiten Ausführung der Baueinheit in Alleinstellung;
- Fig. 5: eine stark schematisierte Darstellung einer dritten Ausführung der Baueinheit in Alleinstellung;
- Fig. 6: eine Prinzipskizze einer vierten Ausführung der Baueinheit in Alleinstellung, und
- Fig. 7: eine stark vereinfachte Darstellung einer fünften Ausführung der Baueinheit in Alleinstellung.

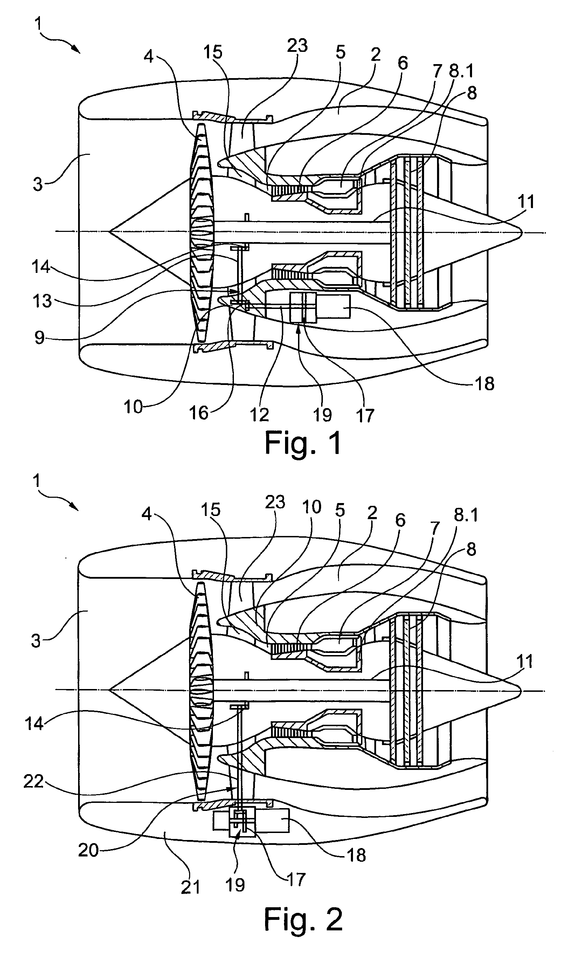

Die Fig. 1 und Fig. 2 zeigen jeweils ein Strahltriebwerk 1 eines Luftfahrzeugs mit im Wesentlichen identischem Aufbau. Das Strahltriebwerk 1 weist einen Nebenstromkanal 2 und einen Einlaufbereich 3 auf. Stromab des Einlaufbereiches 3 schließt sich ein Bläser 4 in an sich bekannter Art und Weise an.

Stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt. Der Triebwerkskern 5 ist in an sich bekannter Art und Weise mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 8.1 ausgeführt.

Die Fig. 1 zeigt weiterhin eine schematisch dargestellte Hilfsgerätegetriebeeinrichtung 9, welche im Wesentlichen im Bereich eines Zwischengehäuses 10 des Strahltriebwerks 1 angeordnet ist. Das Zwischengehäuse 10 befindet sich in radialer Richtung des Strahltriebwerks 1 in einem Bereich zwischen dem Triebwerkskern 5 und dem Nebenstromkanal 2.

Die Hilfsgerätegetriebeeinrichtung 9 wird von einer mit einer Triebwerkswelle 11 zusammenwirkenden Antriebswelle 12 angetrieben, welche im Wesentlichen parallel zu der Triebwerkswelle 11 angeordnet ist und mit der Triebwerkswelle 11 vorliegend über eine Hilfswelle 13 in Wirkverbindung bringbar ist. Die Hilfswelle 13 ist über eine Kegelradverzahnung 14 an die Triebwerkswelle 11 angebunden, wobei sie mit einer Hochdruckwelle zusammenwirkt, welche im Betriebszustand des Strahltriebwerks 1 mit höherer Drehzahl als eine koaxial dazu angeordnete und an den Bläser 4 angebundene Niederdruckwelle rotiert.

Ausgehend von der Triebwerkswelle 11 verläuft die Hilfswelle 13 im Wesentlichen in radialer Richtung des Strahltriebwerks 1 durch einen so genannten inneren Strut 15, d. h. eine mit einem Hohlprofil ausgebildete Strebe, nach außen hin durch den Triebwerkskern 5 zu dem Zwischengehäuse 10. Im Bereich des Zwischengehäuses 10 wirkt die Hilfswelle 13 über eine Kegelradverzahnung 16 mit der Antriebswelle 12 zusammen.

Über insbesondere als Stirnradstufen ausgebildete Zahnradpaarungen 17 einer Getriebeeinrichtung 19 ist die Antriebswelle 12 an nicht näher ersichtliche, im Wesentlichen stromab des Zwischengehäuses 10 angeordnete Hilfsgerätegetriebewellen der Hilfsgerätegetriebeeinrichtung 9 angebunden. Die Hilfsgerätegetriebewellen der Hilfsgerätegetriebeeinrichtung 9 sind im Wesentlichen achsparallel zu der Triebwerkswelle 11 angeordnet und im Wesentlichen in Umfangsrichtung des Triebwerkes 1 verteilt nebeneinander im Bereich des Zwischengehäuses 10, d. h. in radialer Richtung zwischen dem Nebenstromkanal 2 und dem Triebwerkskern 5, positioniert.

Die Hilfsgerätegetriebewellen sind zum Zusammenwirken mit Hilfs- bzw. Nebenaggregaten 18 ausgebildet, welche beispielsweise als Entlüfter, pneumatischer Starter, Generator oder dergleichen ausgeführt sein können und über die Zahnradpaarungen 17 der Hilfsgerätegetriebeeinrichtung 9 von der Antriebswelle 12 antreibbar sind.

Bei der in der Fig. 2 gezeigten Ausführung des Strahltriebwerks 1 ist eine alternativ ausgebildete Hilfsgerätegetriebeeinrichtung 20 gezeigt, welche im Wesentlichen in einem Bereich eines außerhalb des Nebenstromkanals 2 angeordneten Gehäuses 21 angeordnet ist. Eine Antriebswelle 22 der Hilfsgerätegetriebeeinrichtung 20 wirkt dabei direkt mit der Triebwerkswelle 11 zusammen und erstreckt sich ausgehend von der Triebwerkswelle 11 in radialer Richtung zunächst durch den inneren Strut 15, anschließend durch das Zwischengehäuse 10 und schließlich durch einen äußeren Strut 23.

Mit den Hilfsgerätegetriebewellen ist jeweils eine Baueinheit koppelbar, welche im Folgenden in verschiedenen Ausführungen näher beschrieben wird.

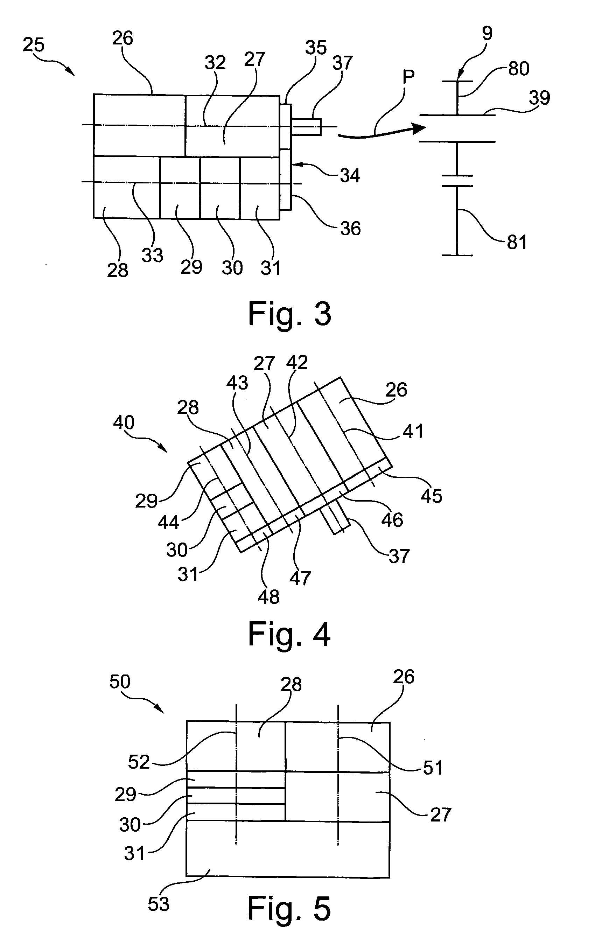

Die Fig. 3 zeigt eine Baueinheit 25, welche vorliegend mit einer Niederdruckbrennstoffpumpe 26, einer Hochdruckbrennstoffpumpe 27, einer Ölförderpumpe 28 und drei Ölrückförderpumpen 29, 30, 31 ausgebildet ist, wobei sämtliche Pumpen 26 bis 31 in dem Ausführungsbeispiel als Flügelzellenpumpen ausgebildet sind.

Die Brennstoffpumpen 26, 27 sind Bestandteil eines Brennstoffkreislaufes, wobei über die Niederdruckbrennstoffpumpe 26 Brennstoff zu einem vorliegend außerhalb der Baueinheit 25 angeordneten Wärmetauscher gefördert wird und dort gekühlt wird, bevor der Brennstoff über die Hochdruckbrennstoffpumpe 27 auf ein gewünschtes Versorgungsdruckniveau angehoben wird. Die Ölpumpen 28 bis 31 sind Bestandteil eines Ölkreislaufes. Über die Hauptförderpumpe 28 wird ein für die Schmierung und Kühlung verschiedener Verbraucherstellen innerhalb des Triebwerks erforderlicher Lieferdruck zur Verfügung gestellt. Die Ölrückförderpumpen 29 bis 31 führen ein im Bereich der Verbraucher, wie beispielsweise der Getriebeeinrichtung 19, gesammeltes Ölvolumen zurück zu einem Haupttank des Ölkreislaufes.

Die Baueinheit 25 weist zwei Wellen 32, 33 auf, wobei die Brennstoffpumpen 26, 27 gemeinsam auf einer ersten Welle 32 und die Ölpumpen 28 bis 31 zusammen auf einer zweiten Welle 33 angeordnet sind. Die Wellen 32, 33 wiederum sind über eine Getriebeeinrichtung 38 mit einer Zahnradpaarung 34 mit einem mit der ersten Welle 32 verbundenen ersten Zahnrad 35 und einem mit der zweiten Welle 33 verbundenen zweiten Zahnrad 36 miteinander gekoppelt, so dass die Wellen 32 eine gewünschte Übersetzung zueinander aufweisen.

Zur Anbindung der Baueinheit 25 an eine in der Fig. 3 nur schematisch dargestellte Hilfsgerätegetriebewelle 39 der Hilfsgerätegetriebeeinrichtung 9 ist ein koaxial zu der ersten Welle 32 angeordneter Wellenbereich 37 vorgesehen, welcher eine Außenverzahnung aufweist. Die Hilfsgerätegetriebewelle 39 ist als Hohlwelle mit einer mit der Außenverzahnung des Wellenbereichs 37 korrespondierenden Innenverzahnung ausgebildet, so dass die in der Fig. 3 beabstandet zu der Hilfsgerätegetriebeeinrichtung 9 gezeigte Baueinheit 25 durch eine Bewegung in Richtung des Pfeils P mit der Hilfsgerätegetriebeeinrichtung 9 in Eingriff bringbar ist. Auf der Hilfsgerätegetriebewelle 39 ist ein Zahnrad 80 der Getriebeeinrichtung 19 angeordnet, welches wiederum mit einem Zahnrad 81 der Getriebeeinrichtung 19 kämmt, das mit der Antriebswelle 12 in Wirkverbindung steht. Die Baueinheit 25 ist auf diese Weise einfach und schnell mit der Hohlwelle 39 der Hilfsgerätegetriebeeinrichtung 9 verbindbar bzw. von dieser lösbar ist.

Die gesamte Baueinheit 25 ist in einem nicht näher ersichtlichen Gehäuse angeordnet und als komplettes Aggregat an der Hilfsgerätegetriebeeinrichtung 9 montierbar bzw. von dieser demontierbar.

In Fig. 4 ist eine alternativ ausgeführte Baueinheit 40 ersichtlich, welche im Unterschied zu der Baueinheit 25 vier Wellen 41, 42, 43, 44 aufweist. Auf einer ersten Welle 41 der Baueinheit 40 ist die Niederdruckbrennstoffpumpe 26, auf einer zweiten Welle 42 ist die Hochdruckbrennstoffpumpe 27, auf einer dritten Welle 43 ist die Ölförderpumpe 28 und auf einer vierten Welle 44 sind die drei Ölrückförderpumpen 29 bis 31 angeordnet. Die Wellen 41 bis 44 sind wiederum über jeweils den Wellen 41 bis 44 zugeordnete Zahnräder 45 bis 48 miteinander wirkverbunden und über den vorliegend der zweiten Welle 42 zugeordneten Wellenbereich 37 mit der Hilfsgerätegetriebeeinrichtung 9, 20 koppelbar.

Eine weitere Ausführung einer Baueinheit 50 ist in der Fig. 5 gezeigt. In der stark schematisierten Darstellung sind die Brennstoffpumpen 26, 27 und die Ölpumpen 28 bis 31 in analoger Weise wie bei der Baueinheit 25 der Fig. 3 auf separaten Wellen 51, 52 angeordnet. Zusätzlich ist in der Fig. 5 ein Wärmetauscher 53 ersichtlich, welcher ebenfalls in einem nicht näher ersichtlichen Gehäuse der Baueinheit 50 angeordnet ist. Der Wärmetauscher 53 ist vorliegend als Lamellenkühleinrichtung ausgebildet und im Wesentlichen senkrecht zu den Wellen 51, 52 der Baueinheit 50 in einem seitlichen Randbereich der Pumpen 26 bis 31 angeordnet. Die Lamellenkühleinrichtung 53 ist einer Form der im Wesentlichen kreisförmigen Pumpen 26 bis 31 nachgebildet und weist eine im Wesentlichen zwei verbundenen Kreisen ähnelnde Form auf.

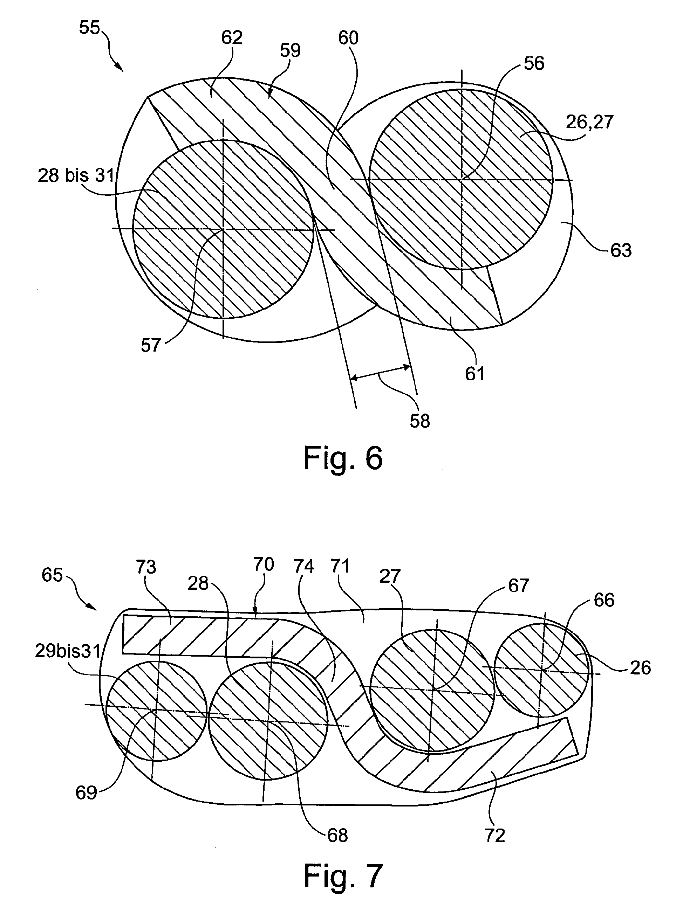

Die Fig. 6 zeigt eine weitere Ausführungsform einer Baueinheit 55, welche mit zwei Wellen 56, 57 ausgebildet ist, wobei die Brennstoffpumpen 26, 27 auf einer ersten Welle 56 und die Ölpumpen 28 bis 31 auf einer zweiten Welle 57 angeordnet sind. Zwischen den Brennstoffpumpen 26, 27 und den Ölpumpen 28 bis 31 liegt quer zur Erstreckungsrichtung der Wellen 56, 57 ein Abstand 58 vor. Die Baueinheit 55 weist einen plattenförmigen Rippenplatten-Wärmetauscher 59 auf, welcher den Abstand 58 zwischen den Pumpen 26 bis 31 in der Schnittdarstellung im Wesentlichen senkrecht durchläuft und diesen nahezu vollständig ausfüllt. An den den Abstand 58 ausfüllenden Bereich 60 des Wärmetauschers 59 schließt sich einenends ein Bereich 61 an, der vorliegend in etwa in einem Viertelkreis an einer Außenwand der Brennstoffpumpen 26, 27 anliegt. Andernends schließt sich an den Bereich 60 ein weiterer Bereich 62 an, der vorliegend in etwa in einem Viertelkreis an einer Außenwand der Ölpumpen 28 bis 31 anliegt. Der Wärmetauscher 59 weist somit einen S-förmigen Querschnitt auf. Der Wärmetauscher 59 und die auf den Wellen 56, 57 angeordneten Pumpen 26 bis 31 sind insgesamt innerhalb eines Gehäuses 63 der Baueinheit 55 angeordnet.

Fig. 7 zeigt eine der Baueinheit 40 der Fig. 4 ähnelnde Baueinheit 65 mit auf vier Wellen 66 bis 69 angeordneten Pumpen 26 bis 31, wobei ein Rippenplatten-Wärmetauscher 70 vorgesehen ist, welcher einen S-förmigen Querschnitt aufweist und in analoger Weise wie der Wärmetauscher 59 der Baueinheit 55 zwischen einer die Hochdruckbrennstoffpumpe 27 aufweisenden Welle 67 und einer die Ölförderpumpe 28 aufweisenden Welle 68 hindurch verläuft und hierdurch die Brennstoffpumpen 26, 27 von den Ölpumpen 28 bis 31 separiert. Der Wärmetauscher 70 weist in der Schnittdarstellung zwei Schenkel 72, 73 auf, wobei ein erster Schenkel 72 jeweils mit einer Außenwand der Brennstoffpumpen 26, 27 und ein zweiter Schenkel 73 jeweils mit einer Außenwand der Ölpumpen 28 bis 31 zusammenwirkt. Die Schenkel 72, 73 sind im Wesentlichen geradlinig ausgebildet und werden über einen zwischen der Hochdruckbrennstoffpumpe 27 und der Ölförderpumpe 28 verlaufenden Bereich 74 miteinander verbunden. Der Wärmetauscher 70, welcher ebenfalls plattenförmig ausgebildet ist, die Wellen 66 bis 69 und die Pumpen 26 bis 31 sind wiederum in einem gemeinsamen Gehäuse 71 angeordnet.

Die vorstehenden Ausführungsbeispiele sind nur exemplarisch für eine Vielzahl von Kombinationsmöglichkeiten beschrieben. Beispielsweise kann die Baueinheit nur eine Brennstoffpumpe 26 oder 27 aufweisen. Ebenso kann die Baueinheit nur die Ölförderpumpe 28 oder eine oder mehrere Ölrückförderpumpen 29 bis 31 aufweisen. Sämtliche in den vorstehenden Ausführungen beschriebenen Elemente der Baueinheiten 25, 40, 50, 55 und 65 sind beliebig miteinander kombinierbar.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 8.1: Hochdruckturbine
- 9: Hilfsgerätegetriebeeinrichtung
- 10: Zwischengehäuse
- 11: Triebwerkswelle
- 12: Antriebswelle
- 13: Hilfswelle
- 14: Kegelradverzahnung
- 15: innerer Strut
- 16: Kegelradverzahnung
- 17: Zahnradpaarungen
- 18: Hilfsaggregat
- 19: Getriebeeinrichtung
- 20: Hilfsgerätegetriebeeinrichtung
- 21: Gehäuse
- 22: Antriebswelle
- 23: äußerer Strut
- 25: Baueinheit
- 26: Niederdruckbrennstoffpumpe
- 27: Hochdruckbrennstoffpumpe
- 28: Ölförderpumpe
- 29 bis 31: Ölrückförderpumpen
- 32: erste Welle
- 33: zweite Welle
- 34: Zahnradpaarungen
- 35: erstes Zahnrad
- 36: zweites Zahnrad
- 37: Wellenbereich
- 38: Getriebeeinrichtung
- 39: Hilfsgerätegetriebewelle
- 40: Baueinheit
- 41: erste Welle
- 42: zweite Welle
- 43: dritte Welle
- 44: vierte Welle
- 45 bis 48: Zahnrad
- 50: Baueinheit
- 51: erste Welle
- 52: zweite Welle
- 53: Wärmetauscher
- 55: Baueinheit
- 56: erste Welle
- 57: zweite Welle
- 58: Abstand
- 59: Rippenplatten-Wärmetauscher
- 60 bis 62: Bereich des Rippenplatten-Wärmetauschers
- 63: Gehäuse
- 65: Baueinheit
- 66 bis 69: Welle
- 70: Rippenplatten-Wärmetauscher
- 71: Gehäuse
- 72: erster Schenkel des Rippenplatten-Wärmetauschers
- 73: zweiter Schenkel des Rippenplatten-Wärmetauschers
- 74: Bereich
- 80, 81: Zahnrad
- P: Pfeil

## Patentansprüche

1. Baueinheit (25, 40, 50, 55, 65) für ein Triebwerk (1) eines Luftfahrzeugs mit wenigstens einer Brennstoffpumpe (26, 27) eines Brennstoffkreislaufes und wenigstens einer Hydraulikfluidpumpe (28 bis 31) eines Hydraulikfluidkreislaufes **dadurch gekennzeichnet, dass** die Baueinheit (25, 40, 50, 55, 65) mit einer Hilfsgerätegetriebewelle (39) einer Hilfsgerätegetriebeeinrichtung (9, 20) des Triebwerks (1) koppelbar ist.

2. Baueinheit nach Anspruch 1, **dadurch gekennzeichnet, dass** die wenigstens eine Brennstoffpumpe (26, 27) und die wenigstens eine Hydraulikfluidpumpe (28 bis 31) in einem gemeinsamen Gehäuse (63, 71) angeordnet sind.

3. Baueinheit nach einem der Ansprüche 1 oder 2, **dadurch gekennzeichnet, dass** eine Niederdruckbrennstoffpumpe (26) und eine Hochdruckbrennstoffpumpe (27) vorgesehen sind, welche auf einer gemeinsamen Welle (32, 51, 56) der Baueinheit (25, 50, 55) angeordnet sind.

4. Baueinheit nach einem der Ansprüche 1 bis 3, **dadurch gekennzeichnet, dass** eine Hydraulikfluidförderpumpe (28) und wenigstens eine Hydraulikfluidrücklaufpumpe (29 bis 31) vorgesehen sind, welche auf einer gemeinsamen Welle (33, 52, 57) der Baueinheit (25, 50, 55) angeordnet sind.

5. Baueinheit nach einem der Ansprüche 1 bis 3, **dadurch gekennzeichnet, dass** eine Hydraulikfluidförderpumpe (28) und wenigstens eine Hydraulikfluidrücklaufpumpe (29 bis 31) vorgesehen sind, welche auf separaten Wellen (43, 44, 68, 69) der Baueinheit (40, 65) angeordnet sind.

6. Baueinheit nach einem der Ansprüche 3 bis 5, **dadurch gekennzeichnet, dass** die Wellen (32, 33, 41 bis 44, 51, 52, 56, 57, 66 bis 69) der Baueinheit (25, 40, 50, 55, 65) über eine Getriebeeinrichtung (38) der Baueinheit (25, 40, 50, 55, 65) miteinander gekoppelt sind.

7. Baueinheit nach Anspruch 6, **dadurch gekennzeichnet, dass** die Getriebeeinrichtung (38) einen mit einer Hilfsgerätegetriebewelle (39) koppelbaren Wellenbereich (37) aufweist.

8. Baueinheit nach einem der Ansprüche 1 bis 7, **dadurch gekennzeichnet, dass** ein Wärmetauscher (53, 59, 70) Bestandteil der Baueinheit (50, 55, 65) ist, welcher insbesondere in das Gehäuse (63, 71) der Baueinheit (50, 55, 65) integriert ist.

9. Baueinheit nach Anspruch 8, **dadurch gekennzeichnet, dass** der Wärmetauscher (53, 59, 70) zur Temperierung von von der Hydraulikfluidförderpumpe (28) und/oder wenigstens einer Hydraulikfluidrücklaufpumpe (29, 30, 31) gefördertem Kühl- bzw. Schmiermittel mit einem von der Niederdruckbrennstoffpumpe (26) und der Hochdruckbrennstoffpumpe (27) geförderten Brennstoff arbeitet.

10. Baueinheit nach einem der Ansprüche 8 oder 9, **dadurch gekennzeichnet, dass** der Wärmetauscher (53, 59, 70) als Lamellenkühleinrichtung, Rippenplatten-Wärmetauscher oder dergleichen ausgebildet ist.

11. Baueinheit nach einem der Ansprüche 8 bis 10, **dadurch gekennzeichnet, dass** der Wärmetauscher (53, 59, 70) im Wesentlichen senkrecht zu den Wellen (41 bis 44) der Baueinheit (50) in einem in axialer Richtung der Wellen (41 bis 44) seitlichen Randbereich der Pumpen (26 bis 31) angeordnet ist.

12. Baueinheit nach einem der Ansprüche 8 bis 11, **dadurch gekennzeichnet, dass** der Wärmetauscher (53, 59, 70) in einem umfangsseitigen Bereich wenigstens einer der Pumpen (26 bis 31) angeordnet ist.

13. Baueinheit nach einem der Ansprüche 8 bis 12, **dadurch gekennzeichnet, dass** der Wärmetauscher (59, 70) rohr- oder ringförmig um wenigstens eine Pumpe angeordnet ist.

14. Baueinheit nach einem der Ansprüche 8 bis 13, **dadurch gekennzeichnet, dass** der Wärmetauscher (59, 70) zumindest teilweise in einem Bereich zwischen einer der Brennstoffpumpen (26, 27) und einer der Hydraulikfluidpumpen (29 bis 31) angeordnet ist.

15. Baueinheit nach einem der Ansprüche 1 bis 14, **dadurch gekennzeichnet, dass** die Pumpen (26 bis 31) als Zahnrad-, Spindel-, Flügelzellenpumpe oder dergleichen ausgeführt sind.

## Claims

1. Structural unit (25, 40, 50, 55, 65) for an aircraft engine (1) having at least one fuel pump (26, 27) of a fuel circuit and at least one hydraulic fluid pump (28 to 31) of a hydraulic fluid circuit, **characterized in that** the structural unit (25, 40, 50, 55, 65) can be coupled to an accessory gearbox shaft (39) of an accessory gearbox (9, 20) of the engine (1).

2. Structural unit in accordance with claim 1, **characterized in that** the at least one fuel pump (26, 27) and the at least one hydraulic fluid pump (28 to 31) are arranged inside a common casing (63, 71).

3. Structural unit in accordance with one of the claims 1 or 2, **characterized in that** a low-pressure fuel pump (26) and a high-pressure fuel pump (27) are provided which are arranged on a common shaft (32, 51, 56) of the structural unit (25, 50, 55).

4. Structural unit in accordance with one of the claims 1 to 3, **characterized in that** a hydraulic fluid delivery pump (28) and at least one hydraulic fluid return pump (29 to 31) are provided which are arranged on a common shaft (33, 52, 57) of the structural unit (25, 50, 55).

5. Structural unit in accordance with one of the claims 1 to 3, **characterized in that** a hydraulic fluid delivery pump (28) and at least one hydraulic fluid return pump (29 to 31) are provided which are arranged on separate shafts (43, 44, 68, 69) of the structural unit (40, 65).

6. Structural unit in accordance with one of the claims 3 to 5, **characterized in that** the shafts (32, 33, 41 to 44, 51, 52, 56, 57, 66 to 69) of the structural unit (25, 40, 50, 55, 65) are coupled to one another by a gearbox (38) of the structural unit (25, 40, 50, 55, 65).

7. Structural unit in accordance with claim 6, **characterized in that** the gearbox (38) has a shaft area (37) that can be coupled to an accessory gearbox shaft (39).

8. Structural unit in accordance with one of the claims 1 to 7, **characterized in that** a heat exchanger (53, 59, 70) forms part of the structural unit (50, 55, 65) and is in particular integrated into the casing (63, 71) of the structural unit (50, 55, 65).

9. Structural unit in accordance with claim 8, **characterized in that** the heat exchanger (53, 59, 70) for temperature control of coolant/lubricant conveyed by the hydraulic fluid delivery pump (28) and/ or at least one hydraulic fluid return pump (29, 30, 31) operates with a fuel conveyed by the low-pressure fuel pump (26) and the high-pressure fuel pump (27).

10. Structural unit in accordance with one of the claims 8 or 9, **characterized in that** the heat exchanger (53, 59, 70) is designed as a lamellar cooling device, a plate-fin heat exchanger or the like.

11. Structural unit in accordance with one of the claims 8 to 10, **characterized in that** the heat exchanger (53, 59, 70) is arranged substantially perpendicular to the shafts (41 to 44) of the structural unit (50) in a lateral rim area of the pumps (26 to 31) in the axial direction of the shafts (41 to 44).

12. Structural unit in accordance with one of the claims 8 to 11, **characterized in that** the heat exchanger (53, 59, 70) is arranged in a circumferential area of at least one of the pumps (26 to 31).

13. Structural unit in accordance with one of the claims 8 to 12, **characterized in that** the heat exchanger (59, 70) is arranged in tubular or annular form around at least one pump.

14. Structural unit in accordance with one of the claims 8 to 13, **characterized in that** the heat exchanger (59, 70) is arranged at least partially in an area between one of the fuel pumps (26, 27) and one of the hydraulic fluid pumps (29 to 31).

15. Structural unit in accordance with one of the claims 1 to 14, **characterized in that** the pumps (26 to 31) are designed as gear, spindle, rotary vane pumps or the like.

## Revendications

1. Unité structurelle (25, 40, 50, 55, 65) pour un moteur (1) d'un aéronef, comprenant au moins une pompe à carburant (26, 27) d'un circuit de carburant et au moins une pompe à fluide hydraulique (28 à 31) d'un circuit de fluide hydraulique, **caractérisée en ce que** l'unité structurelle (25, 40, 50, 55, 65) peut être couplée à un arbre d'entraînement des auxiliaires (39) d'un boîtier d'entraînement des auxiliaires (9, 20) du moteur (1).

2. Unité structurelle selon la revendication 1, **caractérisée en ce que** l'au moins une pompe à carburant (26, 27) et l'au moins une pompe à fluide hydraulique (28 à 31) sont disposées dans un carter (63, 71) commun.

3. Unité structurelle selon une des revendications 1 ou 2, **caractérisée en ce que** sont prévues une pompe à carburant basse pression (26) et une pompe à carburant haute pression (27) qui sont disposées sur un arbre commun (32, 51, 56) de l'unité structurelle (25, 50, 55).

4. Unité structurelle selon une des revendications 1 à 3, **caractérisée en ce que** sont prévues une pompe d'alimentation en fluide hydraulique (28) et au moins une pompe de retour de fluide hydraulique (29 à 31) qui sont disposées sur un arbre commun (33, 52, 57) de l'unité structurelle (25, 50, 55).

5. Unité structurelle selon une des revendications 1 à 3, **caractérisée en ce que** sont prévues une pompe d'alimentation en fluide hydraulique (28) et au moins une pompe de retour de fluide hydraulique (29 à 31) qui sont disposées sur des arbres séparés (43, 44, 68, 69) de l'unité structurelle (40, 65).

6. Unité structurelle selon une des revendications 3 à 5, **caractérisée en ce que** les arbres (32, 33, 41 à 44, 51, 52, 56, 57, 66 à 69) de l'unité structurelle (25, 40, 50, 55, 65) sont reliés entre eux par un boîtier d'entraînement (38) de l'unité structurelle (25, 40, 50, 55, 65).

7. Unité structurelle selon la revendication 6, **caractérisée en ce que** le boîtier d'entraînement (38) présente une partie d'arbre (37) pouvant être couplée à un arbre d'entraînement des auxiliaires (39).

8. Unité structurelle selon une des revendications 1 à 7, **caractérisée en ce qu'**un échangeur de chaleur (53, 59, 70) est un élément de l'unité structurelle (50, 55, 65), qui est en particulier intégré dans le carter (63, 71) de l'unité structurelle (50, 55, 65).

9. Unité structurelle selon la revendication 8, **caractérisée en ce que** l'échangeur de chaleur (53, 59, 70) travaille - pour régler la température d'un agent réfrigérant ou lubrifiant transporté par la pompe d'alimentation en fluide hydraulique (28) et/ ou au moins une pompe de retour de fluide hydraulique (29, 30, 31) - avec un carburant transporté par la pompe à carburant basse pression (26) et la pompe à carburant haute pression (27).

10. Unité structurelle selon une des revendications 8 ou 9, **caractérisée en ce que** l'échangeur de chaleur (53, 59, 70) est conçu en tant que dispositif refroidisseur à lamelles, échangeur de chaleur à plaques-ailettes ou élément similaire.

11. Unité structurelle selon une des revendications 8 à 10, **caractérisée en ce que** l'échangeur de chaleur (53, 59, 70) est pour l'essentiel disposé perpendiculairement aux arbres (41 à 44) de l'unité structurelle (50) dans une zone périphérique des pompes (26 à 31) latérale dans le sens axial des arbres (41 à 44).

12. Unité structurelle selon une des revendications 8 à 11, **caractérisée en ce que** l'échangeur de chaleur (53, 59, 70) est disposé dans une zone circonférentielle d'au moins une des pompes (26 à 31).

13. Unité structurelle selon une des revendications 8 à 12, **caractérisée en ce que** l'échangeur de chaleur (59, 70) est disposé en forme de tube ou d'anneau autour d'au moins une pompe.

14. Unité structurelle selon une des revendications 8 à 13, **caractérisée en ce que** l'échangeur de chaleur (59, 70) est disposé au moins partiellement dans une zone entre une des pompes à carburant (26, 27) et une des pompes à fluide hydraulique (29 à 31).

15. Unité structurelle selon une des revendications 1 à 14, **caractérisée en ce que** les pompes (26 à 31) sont conçues en tant que pompes à engrenages, à broche, à palettes ou de type similaire.
